# FASCICULE DE BREVET EUROPEEN

(11) **EP 2 909 450 B1**
(45) Date de publication et mention de la délivrance du brevet: **07.12.2016**
(21) Numéro de dépôt: 12798335.1
(22) Date de dépôt: 19.10.2012
(51) Int. Cl.: F01D 25/20, F02C 7/06, F04F 5/02, F04F 5/46

(54) **TROMPE A JET POUR DEPRESSURISER DES ENCEINTES DE LUBRIFICATION D'UNE TURBOMACHINE A DOUBLES INJECTEURS INDEPENDANTS**
STRAHLPUMPE ZUR DRUCKENTLASTUNG VON SCHMIERKAMMERN EINER TURBOMASCHINE MIT UNABHÄNGIGEN DOPPELTEN INJEKTOREN
JET PUMP FOR DEPRESSURIZING LUBRICATION CHAMBERS OF A TURBOMACHINE, HAVING INDEPENDENT DOUBLE INJECTORS

(43) Date de publication de la demande: 26.08.2015
(73) Titulaire: Safran Aircraft Engines, 75015 Paris (FR)
(72) Inventeur: TROHEL, Mathieu, F-77550 Moissy-cramayel (FR)
(74) Mandataire: Gevers & Orès
(86) Numéro de dépôt international: PCT/FR2012/052401
(87) Numéro de publication internationale: WO 2014/060656

(56) Documents cités:
- EP-A1- 0 626 503
- EP-A1- 1 972 796
- WO-A1-01/78884
- FR-A1- 2 961 856
- US-A- 2 571 166
- US-A- 4 037 991

## Description

Le domaine de la présente invention est celui des turbomachines et, plus particulièrement celui des enceintes d'huile comportant les paliers portant les rotors de ces turbomachines.

Une turbomachine d'aéronef comprend généralement, d'amont en aval dans le sens de l'écoulement des gaz, une soufflante, un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz. A chaque compresseur peut correspondre une turbine, les deux étant reliés par un arbre, formant ainsi, par exemple, un corps haute pression et un corps basse pression.

Elle présente généralement deux carters structuraux, un carter dit intermédiaire vers l'avant et un carter dit d'échappement vers l'arrière, qui portent les paliers sur lesquels tournent son ou ses arbres de rotation et ses parties mobiles. Ces paliers sont refroidis classiquement, grâce à des injecteurs judicieusement placés, par de l'huile qui les lubrifie et qui est récupérée dans un réservoir approprié puis recyclée. Les paliers et les divers engrenages du moteur sont généralement placés dans une enceinte, qui doit être étanche vis à vis de la veine d'air pour éviter les pertes d'huile. Le moteur comporte ainsi, par exemple, une enceinte amont au niveau du carter intermédiaire et une enceinte aval au niveau du carter d'échappement.

Afin d'éviter des fuites d'huile au travers des joints d'étanchéité aux bornes des enceintes, un écart de pression doit être assuré par rapport aux cavités environnantes et une valeur minimale de cet écart de pression doit ainsi être maintenue à tous les régimes de fonctionnement de la turbomachine. Les cavités environnantes sont pressurisées par de l'air provenant d'un des étages d'un compresseur, qui circule à l'intérieur du moteur pour assurer l'équilibre de ses pressions internes et le refroidissement des parties chaudes. La pression de cet air étant variable en fonction du régime du moteur, il peut être nécessaire, afin d'assurer un écart de pression positif aux bornes des enceintes, de mettre celles-ci en dépression. Pour assurer cette mise en dépression des enceintes renfermant les paliers, on peut utiliser des systèmes de trompe à jet dont le circuit secondaire est branché sur ces enceintes. Ces systèmes fonctionnent sur le principe de l'effet Venturi qui crée une dépression dans un tube par l'envoi dans un circuit dit primaire, d'un jet de fluide sous pression au travers de ce tube. Ce fluide sous pression peut être de l'air prélevé sur un étage du compresseur haute pression (HP) ou bien de l'huile comme décrit dans la demande de brevet de la demanderesse, déposée le 25 juin 2010 sous le numéro FR1055127.

Mais il arrive, notamment au ralenti, que la pression délivrée soit insuffisante pour assurer une dépression correcte. En effet une trompe à jet avec un injecteur primaire qui serait dimensionné pour fonctionner au ralenti conduirait à avoir une trompe à jet surdimensionnée pour le plein gaz. De plus, la trompe à jet n'étant pas dimensionnée pour le plein gaz, son efficacité ne serait pas optimum et le débit primaire prélevé au plein gaz serait trop élevé par au rapport au besoin adapté au plein gaz. Il est donc préférable, afin d'adapter au mieux la dépressurisation des enceintes, de faire varier la puissance de la trompe à jet en fonction du régime moteur. Une solution courante pour cela consiste à moduler le débit primaire de la trompe à jet à l'aide d'une vanne régulée. Mais cette solution comporte plusieurs inconvénients. Tout d'abord cela implique l'utilisation d'une vanne régulée qui est plus coûteuse et plus complexe qu'une vanne tout-ou-rien. Par ailleurs, l'efficacité de la trompe à jet ne sera pas optimisée car la section de l'injecteur primaire ne sera pas adaptée pour les différents régimes de fonctionnement.

La présente invention a pour but de remédier à ces inconvénients en proposant un dispositif simple pour la mise en dépression des enceintes des paliers, qui présente une efficacité maximale pour tous les régimes de fonctionnement de la turbomachine.

A cet effet, l'invention a pour objet un dispositif de mise en dépression d'au moins une enceinte d'une turbomachine destinée à recevoir au moins un palier d'un rotor de ladite turbomachine alimenté en huile de lubrification sous pression par une pompe d'alimentation et par une canalisation d'alimentation en huile, ledit dispositif comportant au moins un tube de dégazage relié à ladite enceinte pour en extraire un brouillard d'huile, un déshuileur apte à séparer l'huile de l'air dans ledit brouillard et une trompe à jet reliée pneumatiquement à ladite enceinte par ledit tube de dégazage et ledit déshuileur, ladite trompe comprenant un tube de trompe dans lequel débouchent un circuit primaire alimenté en un fluide sous pression par une canalisation d'alimentation en fluide et un circuit secondaire raccordé audit déshuileur pour la mise en dépression de l'enceinte, le circuit primaire comportant au moins deux injecteurs en fluide sous pression positionnés dans ledit tube à trompe et alimentés indépendamment l'un de l'autre, caractérisé en ce que les injecteurs sont des rampes percées de trous d'injection, s'étendant radialement en travers du tube de trompe.

La présence de deux injecteurs indépendants permet, en alimentant l'un ou l'autre, ou les deux injecteurs, de faire varier la dépression dans l'enceinte et donc d'adapter celle-ci à tous les régimes de vol.

Avantageusement au moins un des injecteurs est alimenté par une canalisation porteuse d'une vanné de réglage de la pression du flux qui la traverse.

Plus avantageusement chaque injecteur est alimenté par une canalisation porteuse d'une vanne. Ceci donne plus de flexibilité pour adapter la dépression au régime de vol considéré.

Préférentiellement au moins une desdites vannes est une vanne tout-ou-rien. On obtient ainsi un mode extrêmement simple et peu coûteux de réalisation de l'invention.

Dans un premier mode de réalisation les injecteurs sont des buses coniques positionnées en extrémité de leur canalisation d'alimentation en fluide sous pression.

Avantageusement les deux buses ont des diamètres de sortie différents.

Dans un mode particulier de réalisation les trous d'injection des rampes sont en nombre égaux.

Dans un mode alternatif de réalisation la surface totale des trous d'injection est différente entre les rampes.

L'invention porte également sur une turbomachine comportant un dispositif de mise en dépression d'une de ses enceintes de lubrification des paliers tel que décrit ci-dessus.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue générale en coupe d'une turbomachine ;
- la figure 2 est une vue en coupe du carter intermédiaire de la turbomachine de la figure 1,
- la figure 3 est une vue schématique d'un dispositif de dépressurisation des enceintes pour la turbomachine de la figure 1,
- la figure 4 est une vue en coupe de dessus d'un dispositif de dépressurisation des enceintes de la turbomachine de la figure 1, selon un premier mode de réalisation de l'invention,
- la figure 5 est une vue en coupe de profil du dispositif de la figure 4,
- la figure 6 est une vue en coupe de face d'un dispositif de dépressurisation des enceintes de la turbomachine de la figure 1, selon un second mode de réalisation de l'invention, et
- la figure 7 est une vue en coupe de profil du dispositif de la figure 6.

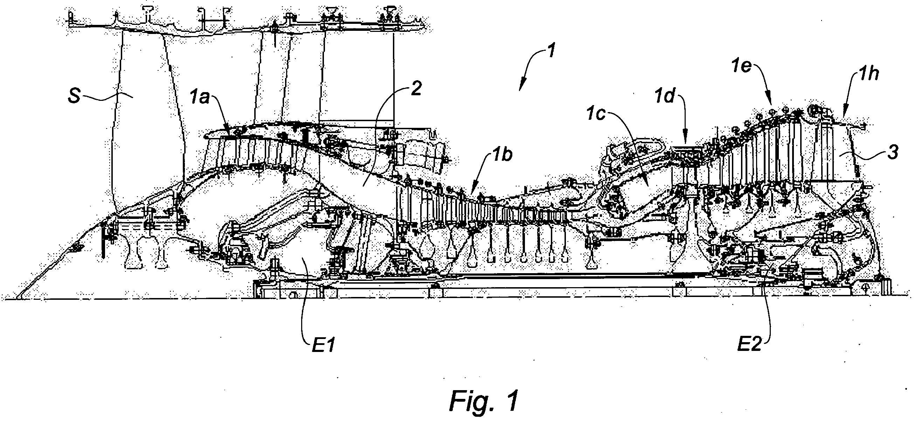

En se référant à la figure 1, on voit un turboréacteur 1 qui comporte, de manière classique, une soufflante S, un compresseur basse pression la, un compresseur haute pression 1b, une chambre de combustion 1c, une turbine haute pression 1d, une turbine basse pression le et une tuyère d'échappement 1h. Le compresseur haute pression 1b et la turbine haute pression 1d sont reliés par un arbre haute pression 4 et forment avec lui un corps haute pression (HP). Le compresseur basse pression la et la turbine basse pression le sont reliés par un arbre basse pression 5 et forment avec lui un corps basse pression (BP).

Les arbres HP et BP s'étendent suivant un axe qui est l'axe de rotation du turboréacteur 1 et dans la suite de la description, les notions de longitudinal ou radial sont relatives à cet axe.

La turbomachine 1 comprend également, classiquement, un carter intermédiaire 2 et un carter d'échappement 3 qui soutiennent, entre autres, les paliers des arbres de rotation BP et HP. Ceux-ci sont enfermés respectivement, dans une enceinte amont E1 rattachée au carter intermédiaire 2, pour les paliers situés en amont du corps HP, et dans une enceinte aval E2 rattachée au carter d'échappement 3, pour les paliers situés en aval du corps HP.

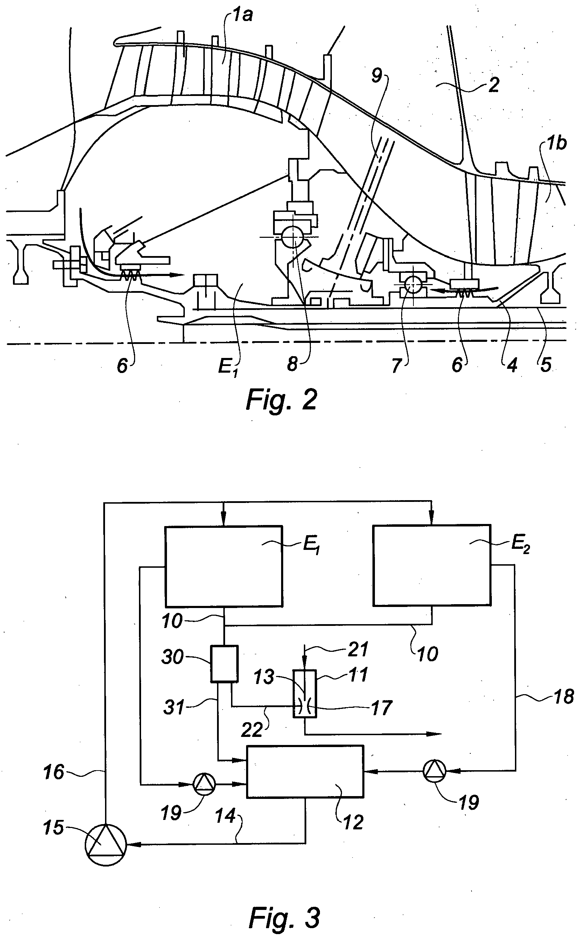

La figure 2 montre la partie avant de la turbomachine de la figure 1, axialement au niveau du compresseur BP 1a, et l'enceinte amont E1. Le carter intermédiaire 2 se prolonge en direction de l'axe de rotation par des cloisons qui forment la partie fixe de l'enceinte E1, tandis que l'arbre HP 4 et l'arbre BP 5 en forment la partie tournante. Ces deux parties se rejoignent pour former l'enceinte E1 au niveau de labyrinthes 6 qui tendent à réduire, autant que faire se peut, la circulation d'air entrant dans cette enceinte. Des flèches indiquent sur la figure le sens de circulation de l'air qui passe au travers des labyrinthes 6.

L'enceinte E1, de même que l'enceinte E2 du carter d'échappement, est reliée vers l'extérieur par une canalisation, non représentée sur la figure, dite de dégazage, par laquelle s'évacue l'air qui a pénétré dans ces enceintes et qui, en sortie, est chargé d'un bouillard d'huile.

A l'intérieur de l'enceinte E1 on voit les roulements de butée et les paliers des arbres HP et BP qui les supportent, référencés respectivement 7 et 8. La figure 2 montre également un arbre de prélèvement de puissance 9 sur le rotor BP 5, auquel il est relié classiquement par des pignons, qui a pour objet d'entraîner les accessoires fonctionnant sur le moteur ou de fournir de la puissance aux équipements de l'avion qui en ont besoin.

En se référant maintenant à la figure 3 on voit, un schéma classique de circulation de l'air qui a pénétré dans les enceintes E1 et E2 par les labyrinthes 6 et celui de la circulation de l'huile de lubrification. Les tubes de dégazage 10 des deux enceintes E1 et E2 sont raccordés à un déshuileur 30 qui a pour fonction de séparer l'air de l'huile, dans le brouillard issu des enceintes. L'huile récupérée est renvoyée directement au réservoir d'huile 12 via une canalisation de retour d'huile 31, tandis que l'air déshuilé est aspiré dans le circuit secondaire 22 d'une trompe à jet 11.

Une trompe à jet comporte classiquement un circuit primaire 21, comprenant une buse 13 débouchant longitudinalement dans un tube cylindrique, ou préférentiellement à proximité de la partie de plus petite section d'un tube comportant un ensemble convergent-divergent 17. A travers la buse est éjecté un fluide sous pression par le circuit primaire, de façon à créer une dépression au niveau du circuit secondaire. Le circuit secondaire de la trompe est rattaché, au niveau de cette plus petite section, à la cavité que l'on souhaite mettre en dépression. Dans le cas d'une turbomachine utilisant une trompe à jet, le circuit secondaire 22 est relié pneumatiquement au déshuileur 30, et à travers lui aux enceintes E1 et E2 par les tubes de dégazage 10. Cela permet de diminuer la pression dans les enceintes pour garantir, d'une part, l'étanchéité et, d'autre part, l'extraction du brouillard d'huile des enceintes E1 et E2. Pour assurer le fonctionnement de la trompe 11 le circuit primaire 21 est classiquement alimenté par de l'air en provenance d'un étage du compresseur HP.

Le circuit de l'huile de lubrification des paliers et des engrenages présents dans les enceintes E1 et E2 comprend, en partant du réservoir 12, une canalisation de sortie 14 qui débouche dans une pompe d'alimentation en huile 15 où sa pression est augmentée, et une canalisation de distribution 16 qui débouche dans les enceintes E1 et E2 au niveau de gicleurs qui projettent l'huile sous pression sur les paliers et les engrenages à lubrifier. Il comprend également un circuit de récupération de l'huile qui collecte l'huile usagée et qui la renvoie au réservoir 12. Tel que représenté sur la figure 3, l'huile usagée et le brouillard aspiré dans les enceintes E1 et E2 sont acheminées par deux canalisations différentes. Le tube de dégazage 10, qui est relié, en sortie du déshuileur 30, au circuit secondaire 22 de la trompe à jet 11, récupère le brouillard aspiré dans les enceintes E1 et E2 alors que des canalisations spécifiques de récupération 18 sont mises en place sur ces enceintes pour récupérer l'huile usagée. Sur ces canalisations sont installées classiquement des pompes de récupération 19 qui propulsent l'huile récupérée dans le réservoir 12. De façon connue, un radiateur (non représenté) est par ailleurs placé sur le circuit pour refroidir l'huile.

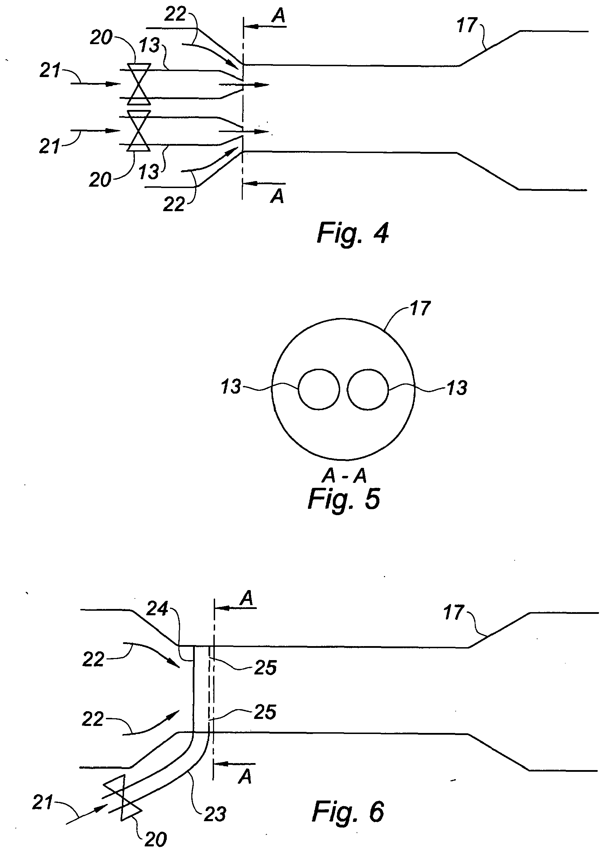

Les figures 4 et 5 montrent en coupe, respectivement en vue de dessus et de profil, une trompe à jet selon un premier mode de réalisation de l'invention.

Le circuit primaire 21 est alimenté par deux buses ou injecteurs 13 qui sont positionnés côte à côte et qui débouchent dans le tube, et dans le cas où il s'agit d'un convergent-divergent 17, au niveau de sa partie la plus étroite. Ces injecteurs ont eux-mêmes une forme cylindrique qui se termine par une partie conique de façon à réduire leur section et, par conséquent, à accélérer la vitesse du fluide du circuit primaire 21 lorsqu'il est injecté dans le convergent-divergent sous l'effet Venturi. Le circuit secondaire 22 est formé par les parois externes du convergent-divergent 17 et est raccordé au déshuileur 30 qui reçoit, par l'intermédiaire des tubes de dégazage 10, le brouillard d'huile aspiré dans les enceintes E1 et E2 et qui rejette de l'air déshuilé vers la trompe à jet 11. Dans le mode de réalisation représenté les injecteurs 13 sont au nombre de deux, mais l'invention pourrait tout aussi bien être réalisée avec un nombre plus élevé d'injecteurs, pour autant que ceux-ci soient alimentés par un fluide sous pression.

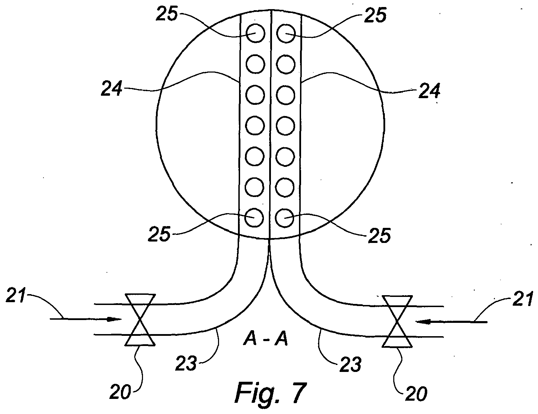

En se référant aux figures 6 et 7, on va maintenant décrire un deuxième mode de réalisation de l'invention. Ici, les injecteurs sont réalisés sous la forme de deux rampes d'injection parallèles 24 qui s'étendent radialement en travers de la partie resserrée du convergent-divergent 17. Ces rampes sont alimentées en fluide du circuit primaire 21 par des canalisations d'alimentation 23 raccordées, comme les injecteurs 13 dans le premier mode de réalisation, au circuit générateur dudit fluide sous pression, que ce soit de l'air prélevé sur le compresseur HP 1b ou de l'huile prélevée en aval de la pompe d'alimentation 15. Chacune des rampes d'injection 24 est percée d'une pluralité de trous d'injection 25, qui sont alignés les uns avec les autres, le long de la rampe 24, et qui diffusent le fluide du circuit primaire 21 selon la direction d'écoulement des fluides dans le Venturi, au niveau de la partie resserrée du convergent-divergent 17. Le circuit secondaire 22 passe dans le convergent-divergent 17 en contournant les rampes d'injection 24.

De même que pour le premier mode, l'invention peut tout aussi bien être réalisée avec un nombre plus élevé de rampes d'injection, pour autant que leurs trous d'injection soient alimentés par un fluide sous pression. De même la disposition parallèle des deux rampes d'injection n'est pas impérative ; elle pourrait être remplacée par une configuration à deux rampes perpendiculaires entre elles ou encore à une pluralité de rampes radiales régulièrement réparties sur la circonférence du tube. Toute configuration comportant au moins une rampe d'injection dont au moins deux trous 25 diffusent un fluide sous pression sensiblement dans l'axe du convergent-divergent 17, entre dans le cadre de l'invention.

On va maintenant décrire le fonctionnement du dispositif de mise en dépression des enceintes E1 et E2 selon le premier mode de réalisation. Le fonctionnement du dispositif selon le deuxième mode de réalisation est identique.

Afin d'adapter la dépressurisation des enceintes, l'invention consiste à utiliser une trompe à jet à deux injecteurs sur le circuit primaire 21, dans laquelle ces deux injecteurs sont indépendants, c'est-à-dire qu'ils sont alimentés tous les deux par un fluide dont la pression qui les traverse peut être modulée indépendamment l'un de l'autre. Pour cela, l'un ou l'autre, voire les deux injecteurs, sont alimentés par des canalisations sur lesquelles sont montées des vannes 20 qui permettent de faire varier la pression dans un ou dans les deux injecteurs et ainsi d'adapter la puissance de la trompe à jet, en fonction du besoin et, en particulier, du régime moteur. De façon à simplifier la réalisation du dispositif de commande de la pression dans le convergent-divergent 17, la ou les vannes 20 sont préférentiellement du type "tout-ou-rien" ce qui permet, en activant ou désactivant un des injecteurs, de moduler la puissance de la trompe à jet de façon optimale. En alimentant seulement l'un des deux injecteurs, ou bien les deux simultanément, on peut disposer d'un débit qui peut aller du simple au double, dans le cas d'injecteurs identiques. Dans le cas où les deux injecteurs présentent des diamètres de sortie différents on peut obtenir trois valeurs de débit possibles, selon que l'on active l'un, l'autre ou les deux injecteurs. Une configuration particulière, qui a l'avantage d'une grande simplicité, consiste à alimenter en permanence un injecteur, c'est-à-dire sans installer de vanne sur sa canalisation d'alimentation, et d'alimenter ou non le second, en fonction du régime moteur, à l'aide d'une vanne tout-ou-rien unique qui est placée sur la canalisation d'alimentation de ce second injecteur.

La même possibilité existe dans le cas du second mode de réalisation, où les vannes 20, qui sont placées sur les canalisations d'alimentation 23, permettent d'alimenter l'une, l'autre ou bien les deux rampes d'injections simultanément. De même que les injecteurs dans le premier mode peuvent être de diamètres différents, la taille ou le nombre des trous d'injection 25 peuvent varier d'une rampe à l'autre, donnant ainsi de multiples possibilités pour adapter la puissance de la trompe à jet au besoin. Le second mode de réalisation a été représenté avec une vanne tout-ou-rien unique pour chaque canalisation d'alimentation en fluide sous pression 23. Il est également possible de prévoir des canalisations individuelles pour chaque trou d'injection 25, sur lesquelles sont installées des vannes tout-ou-rien spécifiques, ce qui démultiplie les possibilités pour ajuster la puissance de la trompe à jet à chaque régime de la turbomachine.

## Revendications

1. Dispositif de mise en dépression d'au moins une enceinte (E1, E2) d'une turbomachine (1) destinée à recevoir au moins un palier (7, 8) d'un rotor de ladite turbomachine alimenté en huile de lubrification sous pression par une pompe d'alimentation (15) et par une canalisation d'alimentation en huile (16), ledit dispositif comportant au moins un tube de dégazage (10) relié à ladite enceinte pour en extraire un brouillard d'huile, un déshuileur (30) apte à séparer l'huile de l'air dans ledit brouillard et une trompe à jet (11) reliée pneumatiquement à ladite enceinte par ledit tube de dégazage et ledit déshuileur, ladite trompe comprenant un tube de trompe (17) dans lequel débouchent un circuit primaire (21) alimenté en un fluide sous pression par une canalisation d'alimentation en fluide et un circuit secondaire (22) raccordé audit déshuileur pour la mise en dépression de l'enceinte, le circuit primaire (21) comportant au moins deux injecteurs (24) en fluide sous pression positionnés dans ledit tube à trompe et alimentés indépendamment l'un de l'autre,
**caractérisé en ce que** les injecteurs sont des rampes (24) percées de trous d'injection (25), s'étendant radialement en travers du tube de trompe (17).

2. Dispositif selon la revendication 1 dans lequel au moins un des injecteurs (24) est alimenté par une canalisation porteuse d'une vanne (20) de réglage de la pression du flux qui la traverse.

3. Dispositif selon la revendication 2 dans lequel chaque injecteur est alimenté par une canalisation porteuse d'une vanne (20).

4. Dispositif selon l'une des revendications 2 ou 3 dans lequel au moins une desdites vannes est une vanne tout-ou-rien.

5. Dispositif selon l'une des revendications 1 à 4 dans lequel les trous d'injection (25) des rampes sont en nombre égaux.

6. Dispositif selon l'une des revendications 1 à 4 dans lequel la surface totale des trous d'injection (25) est différente entre les rampes.

7. Turbomachine comportant un dispositif de mise en dépression d'une de ses enceintes de lubrification des paliers selon l'une des revendications 1 à 6.

## Patentansprüche

1. Vorrichtung zur Erzeugung eines Unterdrucks in mindestens einem Behälter (E1, E2) einer Turbomaschine (1), die dazu bestimmt ist, mindestens ein Lager (7, 8) eines Rotors der Turbomaschine aufzunehmen, der mit Schmieröl unter Druck durch eine Versorgungspumpe (15) und einen Ölzuleitungskanal (16) versorgt wird, wobei die Vorrichtung mindestens ein Entgasungsrohr (10), das mit dem Behälter verbunden ist, um aus diesem einen Ölnebel zu entziehen, einen Ölabscheider (30), der geeignet ist, das Öl von der Luft in dem Nebel zu trennen, und eine Wasserstrahlpumpe (11) umfasst, die pneumatisch mit dem Behälter durch das Entgasungsrohr und den Ölabscheider verbunden ist, wobei die Pumpe ein Pumpenrohr (17) umfasst, in das ein Primärkreislauf (21), der mit Druckfluid durch einen Fluidzuleitungskanal versorgt wird, und ein Sekundärkreislauf (22) mündet, der mit dem Ölabscheider zur Erzeugung des Unterdrucks des Behälters verbunden ist, wobei der Primärkreislauf (21) mindestens zwei Injektoren (24) von Druckfluid umfasst, die in dem Pumpenrohr positioniert sind und unabhängig voneinander versorgt werden,
**dadurch gekennzeichnet, dass** die Injektoren Rampen (24) mit Einspritzlöchern (25) sind, die sich radial über das Pumpenrohr (17) erstrecken.

2. Vorrichtung nach Anspruch 1, bei der mindestens einer der Injektoren (24) durch einen Kanal versorgt wird, der ein Ventil (20) zur Einstellung des Drucks des ihn durchströmenden Stroms trägt.

3. Vorrichtung nach Anspruch 2, bei der jeder Injektor durch einen Kanal, der ein Ventil (20) trägt, versorgt wird.

4. Vorrichtung nach einem der Ansprüche 2 oder 3, bei der mindestens eines der Ventile ein Auf/Zu-Ventil ist.

5. Vorrichtung nach einem der Ansprüche 1 bis 4, bei der die Einspritzlöcher (25) der Rampen in gleicher Anzahl vorhanden sind.

6. Vorrichtung nach einem der Ansprüche 1 bis 4, bei der die Gesamtfläche der Einspritzlöcher (25) zwischen den Rampen unterschiedlich ist.

7. Turbomaschine, umfassend eine Vorrichtung zur Erzeugung eines Unterdrucks in einem ihrer Behälter zum Schmieren der Lager nach einem der Ansprüche 1 bis 6.

## Claims

1. Device for depressurising at least one chamber (E1, E2) of a turbine engine (1) intended to accommodate at least one bearing (7, 8) of a rotor of said turbine engine, said bearing being supplied with lubricating oil under pressure by a supply pump (15) and by an oil supply pipe (16), and said device comprising at least one breather tube (10) connected to said chamber in order to extract a mist of oil therefrom, an air-oil separator (30) capable of separating the oil from the air in said mist and a jet pump (11) connected pneumatically to said chamber by said breather tube and said air-oil separator, said pump comprising a pump tube (17) into which there open a primary circuit (21) supplied with a fluid under pressure by a fluid supply pipe and a secondary circuit (22) connected to said air-oil separator in order to depressurise the chamber, the primary circuit (21) comprising at least two pressurised-fluid injectors (24) positioned in said pump tube and supplied independently of one another, **characterised in that** the injectors are rails (24) perforated by injection holes (25), extending radially across the pump tube (17).

2. Device according to claim 1, wherein at least one of the injectors (24) is supplied by a pipe that has a valve (20) for adjusting the pressure of the flow that passes through it.

3. Device according to claim 2, wherein each injector is supplied by a pipe that has a valve (20).

4. Device according to either claim 2 or claim 3, wherein at least one of said valves is a two-position valve.

5. Device according to any of claims 1 to 4, wherein the injection holes (25) of the rails are equal in number.

6. Device according to any of claims 1 to 4, wherein the total area of the injection holes (25) is different between the rails.

7. Turbine engine comprising a device for depressurising one of its bearing lubrication chambers according to any of claims 1 to 6.
